# EUROPEAN PATENT APPLICATION

(11) **EP 4 693 570 A1**
(43) Date of publication of application: **11.02.2026**
(21) Application number: 23929332.7
(22) Date of filing: 30.03.2023
(51) Int. Cl.: H01M 10/058

(54) **ELECTROCHEMICAL APPARATUS AND ELECTRONIC DEVICE**

(71) Applicant: Ningde Amperex Technology Limited, Ningde, Fujian 352100 (CN)
(72) Inventor: CAI, Xiaohu, Ningde, Fujian 352100 (CN)
(74) Representative: Icosa
(86) International application number: PCT/CN2023/085212
(87) International publication number: WO 2024/197736

(57) **Abstract**

The electrochemical apparatus in this application includes an electrode assembly, a positive electrode tab, and a negative electrode tab. In the electrode assembly, a separator is disposed between a positive electrode plate and a negative electrode plate. The positive electrode tab is connected to the positive electrode plate, and the negative electrode tab is connected to the negative electrode plate. The positive electrode plate includes a positive electrode current collector and a positive electrode active material layer disposed on its surface. The number a of the positive electrode tabs and the number b of layers of the positive electrode plate satisfy the relationship 0.25≤a/b≤1.25. A molar percentage X of nickel in the positive electrode active material satisfies the relationship X≥60%. A thickness h1 of the positive electrode active material layer satisfies: 10µm≤h1≤30µm. Increasing the number of positive electrode tabs can effectively reduce the current density of an individual positive electrode tab, reducing the thickness of the positive electrode active material layer can shorten a lithium-ion transport distance, and increasing the molar percentage of nickel in the positive electrode active material layer can enhance the energy density of the electrochemical apparatus, thereby effectively reducing the temperature rise of the electrochemical apparatus during high-rate discharge.

## Description

### TECHNICAL FIELD

Embodiments of this application relate to the field of electrochemical apparatus technologies, and specifically, to an electrochemical apparatus and an electronic device.

### BACKGROUND

With the advancement of electronic device technology, electronic devices are increasingly used in daily life, such as electronic smart wearable devices, smartphones, computers, drones, or electric vehicles. As important electrical energy storage devices, the storage performance and safety performance of electrochemical apparatus need to be strictly controlled.

Taking lithium-ion batteries as an example, the current lithium-ion batteries tend to have a rapid temperature rise during high-rate discharge, which significantly affects the battery life over multiple charge and discharge cycles. Therefore, reducing the temperature rise of lithium-ion batteries during high-rate discharge is an urgent problem to be solved.

### SUMMARY

Embodiments of this application mainly solve the technical problem of providing an electrochemical apparatus and an electronic device that can effectively address the issue of excessive temperature rise during charging of the electrochemical apparatus.

To solve the above technical problem, another technical solution adopted in embodiments of this application is: An electrochemical apparatus is provided, including an electrode assembly, a positive electrode tab, and a negative electrode tab, where the electrode assembly includes a positive electrode plate, a separator, and a negative electrode plate, the separator is disposed between the positive electrode plate and the negative electrode plate, the positive electrode plate includes a positive electrode current collector and a positive electrode active material layer, the positive electrode active material layer is disposed on at least one surface of the positive electrode current collector, the positive electrode active material layer includes a positive electrode active material, the positive electrode tab is connected to the positive electrode current collector, and the negative electrode tab is connected to the negative electrode plate, where the number a of positive electrode tabs and the number b of layers of the positive electrode plates satisfy: 0.25≤a/b≤1.25; a molar percentage X of nickel in the positive electrode active material satisfies: X≥60%; and a thickness h1 of the positive electrode active material layer satisfies: 10µm≤h1≤30µm.

In some embodiments, the number a of positive electrode tabs and the number b of layers of the positive electrode plates satisfy: 0.5≤a/b≤1.

In some embodiments, the molar percentage X of nickel in the positive electrode active material satisfies: 80%≤X≤95%.

In some embodiments, the number a of positive electrode tabs satisfy: 5≤a≤40; and the number b of layers of the positive electrode plates satisfies: 20≤b≤40.

In some embodiments, a thickness h2 of the positive electrode current collector satisfies: 7µm≤h2≤15µm.

In some embodiments, the positive electrode active material layer includes carbon nanotubes, and the carbon nanotubes satisfy at least one of the following conditions: (1) a length of the carbon nanotubes ranges from 0.1µm to 6µm; (2) a diameter of the carbon nanotubes ranges from 10nm to 20nm; and (3) Dᵥ90 of the carbon nanotubes ranges from 3µm to 10µm.

In some embodiments, Dᵥ90 of the positive electrode active material ranges from 12µm to 30µm.

In some embodiments, the positive electrode plate further includes a functional layer, the functional layer is disposed on a same surface of the positive electrode current collector as the positive electrode active material layer, the functional layer is disposed on a side on the surface of the positive electrode current collector near the positive electrode tab, and a thickness of the functional layer ranges from 10µm to 25µm.

In some embodiments, the functional layer includes inorganic particles and a binder.

To solve the above technical problem, another technical solution adopted by embodiments of this application is: An electronic device is provided, including the electrochemical apparatus as described above.

The electrochemical apparatus in embodiments of this application includes an electrode assembly, a positive electrode tab, and a negative electrode tab. In the electrode assembly, a separator is disposed between a positive electrode plate and a negative electrode plate. The positive electrode tab is connected to the positive electrode plate, and the negative electrode tab is connected to the negative electrode plate. The positive electrode plate includes a positive electrode current collector and a positive electrode active material layer disposed on its surface. When the molar percentage of nickel in the positive electrode active material is high, matching the number of layers of the positive electrode plate with the number of tabs, as well as the thickness of the positive electrode active material layer, and reasonably setting and matching the relationship among the three can effectively reduce the temperature rise of the lithium-ion battery during high-rate discharge. Specifically, the positive electrode active material contains a nickel-containing material, the molar percentage X of nickel in the positive electrode active material satisfies X≥60%, the number a of the positive electrode tabs is matched with the number b of layers of the positive electrode plate to satisfy 0.25≤a/b≤1.25, and the thickness h1 of the positive electrode active material layer satisfies 10µm≤h1≤30µm. Through the above settings, the temperature rise of the electrochemical apparatus during high-rate discharge can be effectively reduced, enhancing the safety and stability performance of the electrochemical apparatus.

### BRIEF DESCRIPTION OF DRAWINGS

To describe the technical solutions in specific embodiments of this application or in the prior art more clearly, the following briefly describes the accompanying drawings required for describing the specific embodiments or the prior art. In all the accompanying drawings, similar elements or portions are generally marked by similar reference signs. In the accompanying drawings, the elements or portions are not necessarily drawn to scale.
FIG. 1 is a schematic diagram of an electrochemical apparatus according to an embodiment of this application;
FIG. 2 is a schematic cross-sectional view along A-A in FIG. 1;
FIG. 3 is a schematic diagram of a positive electrode plate in an electrochemical apparatus according to an embodiment of this application; and
FIG. 4 is a schematic cross-sectional view along B-B in FIG. 3;

### DESCRIPTION OF EMBODIMENTS

For ease of understanding of this application, the following further describes this application in detail with reference to the accompanying drawings and specific embodiments. It should be noted that when an element is referred to as being "fixed to" another element, it may be directly fixed to the another element, or there may be one or more elements therebetween. When an element is referred to as being "connected to" another element, it may be directly connected to the another element, or there may be one or more elements therebetween. The orientations or positional relationships indicated by the terms "upper", "lower", "inside", "outside", "perpendicular", "horizontal", and the like used herein are based on the orientations or positional relationships shown in the accompanying drawings. These terms are merely for ease and brevity of description of this application rather than indicating or implying that the apparatuses or elements mentioned must have specific orientations or must be constructed or manipulated according to specific orientations, and therefore shall not be construed as any limitations on this application. In addition, the terms "first", "second", and the like are merely for the purpose of description and shall not be understood as any indication or implication of relative importance.

Unless otherwise defined, all technical and scientific terms used herein shall have the same meanings as commonly understood by persons skilled in the art to which this application belongs. The terms used in the specification of this application are merely intended to describe specific embodiments but not to constitute any limitations on this application. The term "and/or" used herein includes any and all combinations of one or more associated items listed. In addition, technical features involved in different embodiments of this application that are described below may be combined as long as they do not conflict with each other.

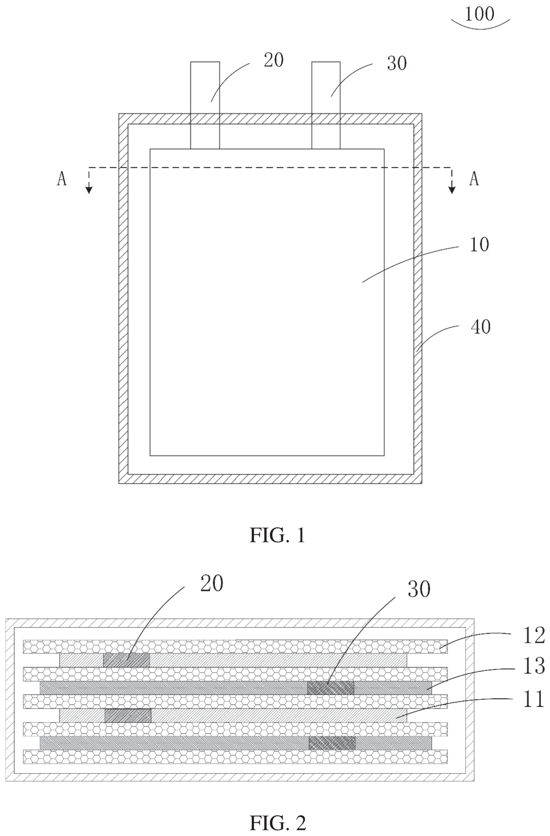

Referring mainly to FIG. 1, the electrochemical apparatus 100 includes an electrode assembly 10, a positive electrode tab 20, a negative electrode tab 30, and a housing 40. The housing 40 is provided with an accommodating cavity, the electrode assembly 10 is disposed within the accommodating cavity, one end of the positive electrode tab 20 and one end of the negative electrode tab 30 are electrically connected to the electrode assembly 10, respectively; and another end of the positive electrode tab 20 and another end of the negative electrode tab 30 extend out from the accommodating cavity. Of course, the accommodating cavity also contains an electrolyte for the electrode assembly 10 to undergo electrochemical reactions.

Referring mainly to FIG. 2, the electrode assembly 10 includes a positive electrode plate 11, a separator 12, and a negative electrode plate 13. The positive electrode plate 11, the separator 12, and the negative electrode plate 13 are stacked to form a laminated electrode assembly 10, where the positive electrode plate 11 and the negative electrode plate 13 are separated by the separator 12. One end of the positive electrode tab 20 is electrically connected to the positive electrode plate 11, and one end of the negative electrode tab 30 is connected to the negative electrode plate 13. Of course, in other embodiments, the positive electrode plate 11, the separator 12, and the negative electrode plate 13 may be stacked and then wound to form a wound electrode assembly 10. The formation method of the electrode assembly 10 is not limited in this application. When the electrode assembly 10 has a laminated structure, the number of layers of the positive electrode plate is the number of the positive electrode plates, that is, the number of layers of the positive electrode plates equals the number of the positive electrode plates in the electrode assembly 10. When the electrode assembly 10 has a wound-type structure, the number of layers of the positive electrode plate is determined by the number of folds of the positive electrode plate when the positive electrode plate is unwound along the winding direction of the electrode assembly 10.

The number a of the positive electrode tabs 20 satisfies: 2≤a≤40; the number b of the positive electrode plates 11 satisfies: 20≤b≤40; and the number a of the positive electrode tabs 20 and the number b of the positive electrode plates 11 satisfy the relationship: 0.25≤a/b≤1.25. To ensure that the electrochemical apparatus 100 has sufficient capacity, the number b of positive electrode plates 11 in the electrode assembly 10 is typically 20 to 40, and the number a of the positive electrode tabs 20 is at least 2. To reduce the load of current flow in the positive electrode plates 11, the number a of the positive electrode tabs 20 may be multiple, such as 5, 10, 15, and the like, and the ratio of the number of the positive electrode tabs 20 to the number of the positive electrode plates 11 should be above 0.25, that is, one-quarter. Through the usage of the structure of multiple positive electrode tabs 20, the current density output by a single positive electrode tab 20 can be reduced, thereby reducing the impedance of the electrode assembly, lowering heat generation, and reducing the temperature rise of the electrochemical apparatus 100 caused by current flow. In other embodiments, the number a of the positive electrode tabs 20 and the number b of the positive electrode plates 11 satisfy the relationship: 0.5≤a/b≤1.

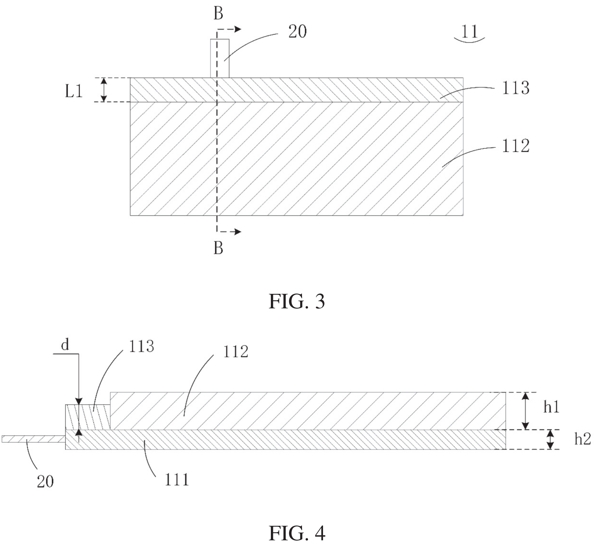

For the above positive electrode plate 11, referring mainly to FIGs. 3 and 4, the positive electrode plate 11 includes a positive electrode current collector 111 and a positive electrode active material layer 112. The positive electrode active material layer 112 is disposed on a surface of the positive electrode current collector 111, and one end of the positive electrode tab 20 is connected to the positive electrode current collector 111. The positive electrode active material layer 112 includes a positive electrode active material, where a molar percentage X of nickel in the positive electrode active material satisfies: X≥60%.

The higher the nickel percentage in the positive electrode active material, the higher a gram capacity of the positive electrode active material. When the design capacity is fixed, using a high-nickel percentage positive electrode active material allows for less weight in a single-layer coating on a surface of the positive electrode current collector 111. Under the same compacted density, a thickness of the positive electrode plate 11 can be thinner, the lithium ion transmission path is shorter, the impedance of the electrode assembly 10 is smaller, and the heat generation of the electrochemical apparatus 100 during discharge is less. At the same time, the thickness of the positive electrode plate 11 is reduced, which is more conducive to heat dissipation, resulting in a lower temperature rise of the electrochemical apparatus 100. In other embodiments, the molar percentage X of nickel in the positive electrode active material satisfies: 80%≤X≤95%.

Referring mainly to FIGs. 3 and 4, along a thickness direction of the positive electrode plate 11, a thickness h1 of the positive electrode active material layer 112 satisfies: 10µm≤h1≤30µm. Making the thickness h1 of the positive electrode active material layer 112 thinner can shorten the transmission distance of lithium ions between the positive electrode plate 11 and the negative electrode plate 13, meeting the rapid transmission needs of lithium ions under high-rate discharge conditions, thereby ensuring that the electrochemical apparatus 100 has a high discharge capacity retention rate.

Dᵥ90 of the positive electrode active material ranges from 12µm to 30µm. The size of Dᵥ90 of the positive electrode active material affects the performance of the positive electrode plate 11. When Dᵥ90 of the positive electrode active material is too large, it becomes difficult to adequately apply the positive electrode active material on the surface of the positive electrode current collector 111, making the positive electrode plate 11 prone to surface scratches. Furthermore, the specific surface area of the positive electrode active material is too small, it results in poor kinetic performance of the positive electrode active material, making the electrochemical apparatus 100 prone to excessive temperature differences during high-rate charge and discharge processes. When Dᵥ90 of the positive electrode active material is too small, the positive electrode active material is prone to aggregation, reducing the electrical performance of the positive electrode plate 11 and not conducive to exerting the high-temperature performance of the positive electrode plate 11.

The positive electrode active material layer 112 includes carbon nanotubes, and the carbon nanotubes satisfy at least one of the following conditions: (1) a length of the carbon nanotubes ranges from 0.1 µm to 6µm; (2) a diameter of the carbon nanotubes ranges from 10nm to 20nm; and (3) Dᵥ90 of the carbon nanotubes ranges from 3µm to 10µm.

The high length-to-diameter ratio of carbon nanotubes is conducive to forming a conductive network among particles, enhancing the conductivity of the positive electrode plate 11. Dᵥ90 of the carbon nanotubes is in a suitable range, which is beneficial to the dispersion of carbon nanotubes. If Dᵥ90 is too large, it can easily lead to a high degree of self-aggregation of the carbon nanotubes. If Dᵥ90 is too small, it can easily cause aggregation of the carbon nanotubes with binders, which is not conducive to the construction of the conductive network. Therefore, adding carbon nanotubes to the positive electrode active material layer 112 and limiting the morphology of the carbon nanotubes according to the above conditions can help reduce the internal resistance of the positive electrode plate 11, further reducing the internal resistance of the entire electrochemical apparatus 100. Under the same current, the smaller the internal resistance of the electrochemical apparatus 100, the less heat it generates, thus further reducing the temperature rise of the electrochemical apparatus 100 during high-rate discharge.

Referring mainly to FIGs. 3 and 4, along the thickness direction of the positive electrode plate 11, a thickness h2 of the positive electrode current collector 111 satisfies: 7µm≤h2≤15µm. The function of the positive electrode current collector 111 is to carry the positive electrode active material layer 112 and a functional layer 113. While the nickel percentage and conductivity of the positive electrode active material layer 112 is being increased, the thickness of the positive electrode current collector 111 can be reduced, thereby increasing the energy density of the electrochemical apparatus 100.

Referring mainly to FIGs. 3 and 4, the positive electrode plate 11 further includes the functional layer 113, the functional layer 113 is disposed on a same surface of the positive electrode current collector 111 as the positive electrode active material layer 112, and along a width direction of the positive electrode current collector 111, the functional layer 113 is disposed on a side on the surface of the positive electrode current collector 111 closer to the positive electrode tab 20 compared to the positive electrode active material layer 112. The functional layer 113 is configured to cover burrs and debris generated during the slitting of the positive electrode plate 11 and the cutting of the positive electrode tab 20, preventing the burrs and debris from piercing the separator 12 and causing direct contact between the positive electrode plate 11 and the negative electrode plate 13, resulting in an internal short circuit of the electrode assembly 10.

A thickness d of the functional layer 113 should be less than or equal to the thickness h1 of the positive electrode active material layer 112. After the positive electrode active material layer 112 and the functional layer 113 are applied on the positive electrode current collector 111, the positive electrode active material layer 112 needs to be compacted. The roller simultaneously compacts the positive electrode active material layer 112 and the functional layer 113. Since the functional layer 113 mainly includes inorganic particles and a binder, hardness of the functional layer 113 is greater than hardness of the positive electrode active material layer 112. If the thickness d of the functional layer 113 is greater than the thickness h1 of the positive electrode active material layer 112, it will result in the positive electrode active material layer 112 not being properly compacted, and may even cause the positive electrode current collector 111 to break. Of course, the thickness d of the functional layer 113 should not be too thin, otherwise it will not cover the burrs and debris on the positive electrode current collector 111.

The electrochemical apparatus 100 in embodiments of this application includes an electrode assembly 10, a positive electrode tab 20, and a negative electrode tab 30. In the electrode assembly 10, a separator 12 is disposed between a positive electrode plate 11 and a negative electrode plate 13. The positive electrode tab 20 is connected to the positive electrode plate 11, and the negative electrode tab 30 is connected to the negative electrode plate 13. The positive electrode plate 11 includes a positive electrode current collector 111 and a positive electrode active material layer 112 disposed on its surface. The number a of the positive electrode tabs 20 and the number b of the positive electrode plates 11 satisfy the relationship 0.25≤a/b≤1.25. The positive electrode active material contains a nickel-containing material, and a molar percentage X of nickel in the positive electrode active material satisfies the relationship X≥60%. A thickness h1 of the positive electrode active material layer 112 satisfies the relationship 10µm≤h1≤30µm. Increasing the number of positive electrode tabs 20 can effectively reduce the current density of an individual positive electrode tab 20, thereby reducing the heat generated by current flow. Additionally, reducing the thickness of the positive electrode active material layer 112 can shorten the transmission distance of lithium ions, meeting the rapid transmission needs of lithium ions under high-rate discharge conditions of the electrochemical apparatus 100, ensuring that the electrochemical apparatus 100 has a high discharge capacity retention rate. Furthermore, increasing the molar percentage of nickel in the positive electrode active material layer 112 can increase the energy density of the electrochemical apparatus 100. Through these settings, the temperature rise of the electrochemical apparatus 100 during high-rate discharge can be effectively reduced, enhancing the safety and stability performance of the electrochemical apparatus 100.

To facilitate understanding of the technical solutions and beneficial effects of this application by those skilled in the art, the following description uses a lithium-ion battery as an example.

### [Test methods]

### 1. Test method for Dᵥ90 of the positive electrode material

(1) Turn on the device: First, turn on the device and enter the sample feeding system, open the optical path system and the computer, and preheat the device for 30 min.
(2) Clean the sample feeding system: Fill the sampler with water, adjust the speed to the maximum and clean for 5s, then adjust the speed to 0. Repeat the cleaning process 3 times to ensure the sampler is clean.
(3) Enter the "Manual Measurement" interface: Sequentially set parameters such as material name, refractive index, material type, test time, and number of tests.
(4) Click "start" to perform light calibration and background light measurement.
(5) Disperse the positive electrode material in an aqueous solution (10 mL), and use a laser diffraction/scattering particle size distribution meter (Master Sizer 3000) for testing. Add the sample to the sample chamber, and the obscuration will increase with the amount of sample added. When the obscuration increases to 8% to 12%, stop adding the sample. Wait for the obscuration to stabilize (usually within 30 seconds without further fluctuation), then click "start" to begin the test. After the test, Dᵥ90 is obtained.
(6) Test 3 parallel samples and calculate the average value of Dᵥ90.

### 2. Test method for cycling retention rate:

Take the battery to be tested and let it stand for 5 minutes at a test temperature of 25±3°C. Charge it at a constant current 1.5C to a voltage of 4.50V, then continue charging at a constant voltage of 4.50V to 0.025C. Let it stand for 5 minutes, then discharge it at a constant current of 0.5C to 3.0V, and let it stand for another 5 minutes. Record the capacity at this time as D0. Repeat the above charge and discharge process 600 times, and record the discharge capacity of the last cycle as D1. After cycling at 25±3°C, the capacity decay rate is D1/D0, in a unit of %.

3. Test method for battery temperature rise: Place the battery in an example in an environment with a temperature of 25±3°C. Place a temperature sensor at the geometric center of the battery to monitor the surface temperature of the cell. Charge the battery at a constant current of 1C to a voltage of 4.50V, and continue charging at a constant voltage of 4.50V until the current is ≤0.025C, then stop charging. The temperature sensor monitors the battery temperature throughout the charging process. Discharge the battery at a constant current rate of 15C until the voltage is ≤2.8V. The temperature sensor monitors the battery temperature throughout the discharging process, and the maximum temperature value T1 is recorded. The temperature rise during discharge ΔT is calculated as Δ=T1-25, in a unit of °C.

### Example 1:

1. <Preparation of positive electrode plate>: Carbon nanotubes (CNTs) and binder PVDF were mixed at a certain ratio, and NMP was added to prepare a conductive adhesive solution (with a solid content of 7%). After the mixing was completed, the positive electrode active material lithium nickel cobalt manganese oxide was added. The mixture was then stirred by using a vacuum mixer until the system became homogeneous, obtaining a positive electrode slurry with a solid content of about 75%, where the molar percentage X of nickel in the positive electrode active material was 80%, and the mass ratio of the components was NCM: conductive carbon nanotubes: binder = 97:1:2. The positive electrode slurry and the functional layer (inorganic particles and binder) were applied on a surface of 12µm aluminum foil (positive electrode current collector). The coated foil was then dried and cold-pressed, followed by die-cutting to form tabs, plate cutting, and adapting welding to attach external positive electrode tabs to obtain the positive electrode plate. The thickness h1 of the positive electrode active material layer was 25µm, the thickness d of the functional layer was 25µm, and the width L1 of the functional layer was 1.5µm.
2. <Preparation of negative electrode plate>: Artificial graphite, styrene-butadiene rubber, and sodium carboxymethyl cellulose were mixed at a mass ratio of 96%:2%:2% with deionized water and an additive, and stirred to uniformity to obtain a negative electrode slurry. The negative electrode slurry was applied on a surface of 12µm copper foil. The coated foil was then dried and cold-pressed, followed by die-cutting to form tabs, plate cutting, and adapting welding to attach external negative electrode tabs to obtain a negative electrode plate.
3. <Preparation of electrolyte>: In a dry argon environment, ethylene carbonate (EC), propylene carbonate (PC), and diethyl carbonate (DEC) were mixed at a weight ratio of 1:1:1, and lithium hexafluorophosphate (LiPF6) was added and mixed to uniformity to form a basic electrolyte, where the concentration of LiPF6 was 1.15mol/L.

### (4) <Preparation of separator>: A polyethylene (PE) porous polymer film was used as a separator.

5. <Preparation of lithium-ion battery>: The positive electrode plate, separator, and negative electrode plate were stacked sequentially and wound to form an electrode assembly, where the number of layers of the positive electrode plate was 40, and the number of positive electrode tabs was 20. The electrode assembly was placed in the outer packaging foil, leaving an injection port. The electrolyte was injected through the injection port, and the cell was sealed. After processes such as formation, capacity test, and other processes, the lithium-ion battery was prepared. The ratio of the number a of positive electrode tabs to the number b of layers of the positive electrode plates was 0.25.

Example 2 to Example 8, Comparative Example 1, and Comparative Example 2: Except that different number of the positive electrode tabs and number of layers of the positive electrode plates were selected in <Preparation of positive electrode plate> according to Table 1 to adjust the ratio between the number a of the positive electrode tabs and the number b of layers of the positive electrode plates, the rest of the parameter settings were the same as in Example 1. When the number of layers of the positive electrode plate changed, the corresponding number of layers of the negative electrode plate and separator were also adjusted according to the number of layers of the positive electrode plate.

Example 9 to Example 11, and Comparative Example 3: Except that the molar percentage X of nickel in the positive electrode active material was adjusted in <Preparation of positive electrode plate> according to Table 1, the rest of the parameter settings were the same as in Example 3.

Example 12, Example 13, Comparative Example 4, and Comparative Example 5: Except that the thickness h1 of the positive electrode active material layer was adjusted in <Preparation of positive electrode plate> according to Table 1, the rest of the parameter settings were the same as in Example 3.

Example 14 to Example 17: Except that the thickness h2 of the positive electrode current collector was adjusted in <Preparation of positive electrode plate> according to Table 1, the rest of the parameter settings were the same as in Example 1. Example 18 to Example 21: Except for the conductive carbon nanotubes being different from those in Example 3, the rest of the parameter settings were the same as in Example 3. Details are given in Table 2.

**Table 1**

| | Number a of positive electrode tabs | Number b of layers of positive electrode plate | a/b | Molar percentage of nickel (%) | Thickness h1 of positive electrode active material layer (µm) | Thickness h2 of positive electrode current collector (µm) | Carbon nanotubes | Temperature rise at 15C DC (°C) | Capacity retention rate after 600 cycles (%) |
|---|---|---|---|---|---|---|---|---|---|
| Comparative Example 1 | 1 | 40 | 0.03 | 80 | 25 | 12 | CNT-1 | 75.5 | 59.8 |
| Comparative Example 2 | 2 | 40 | *0.05* | 80 | 25 | 12 | CNT-1 | 71.3 | 62.2 |
| Comparative Example 3 | 20 | 40 | 0.5 | *50* | 25 | 12 | CNT-1 | 69.8 | 75.9 |
| Comparative Example 4 | 20 | 40 | 0.5 | 80 | 8 | 12 | CNT-1 | 63.3 | 68.3 |
| Comparative Example 5 | 20 | 40 | 0.5 | 80 | 35 | 12 | CNT-1 | 63.2 | 72.5 |
| Example 1 | 10 | 40 | 0.25 | 80 | 25 | 12 | CNT-1 | 62.5 | 64.1 |
| Example 2 | 5 | 20 | 0.25 | 80 | 25 | 12 | CNT-1 | 59.9 | 74.2 |
| Example 3 | 20 | 40 | 0.5 | 80 | 25 | 12 | CNT-1 | 57.3 | 75.6 |
| Example 4 | 15 | 30 | 0.5 | 80 | 25 | 12 | CNT-1 | 58.8 | 74.9 |
| Example 5 | 25 | 50 | 0.5 | 80 | 25 | 12 | CNT-1 | 59.3 | 74.2 |
| Example 6 | 10 | 15 | 0.7 | 80 | 25 | 12 | CNT-1 | 60.4 | 72.5 |
| Example 7 | 40 | 40 | 1 | 80 | 25 | 12 | CNT-1 | 57.1 | 74.8 |
| Example 8 | 50 | 40 | 1.25 | 80 | 25 | 12 | CNT-1 | 58.3 | 66.7 |
| Example 9 | 20 | 40 | 0.5 | 60 | 25 | 12 | CNT-1 | 61.2 | 75.7 |
| Example 10 | 20 | 40 | 0.5 | 90 | 25 | 12 | CNT-1 | 57 | 72.8 |
| Example 11 | 20 | 40 | 0.5 | 95 | 25 | 12 | CNT-1 | 57.8 | 68.9 |
| Example 12 | 20 | 40 | 0.5 | 80 | 10 | 12 | CNT-1 | 59.2 | 73.5 |
| Example 13 | 20 | 40 | 0.5 | 80 | 30 | 12 | CNT-1 | 59.6 | 75.8 |
| Example 14 | 20 | 40 | 0.5 | 80 | 25 | 5 | CNT-1 | 62.3 | 68.1 |
| Example 15 | 20 | 40 | 0.5 | 80 | 25 | 7 | CNT-1 | 57.5 | 73.2 |
| Example 16 | 20 | 40 | 0.5 | 80 | 25 | 15 | CNT-1 | 59.6 | 72.3 |
| Example 17 | 20 | 40 | 0.5 | 80 | 25 | 18 | CNT-1 | 63.0 | 68.8 |

**Table 2**

| | Carbon nanotubes | Type | Tube length (µm) | Tube diameter (nm) | Length-diameter ratio | Dᵥ90 | Temperature rise at 15C DC (°C) | Capacity retention rate after 600 cycles (%) |
|---|---|---|---|---|---|---|---|---|
| Example 3 | CNT-1 | CNTs | 4.0 | 19.5 | 205 | 6.7 | 57.3 | 75.6 |
| Example 18 | CNT-2 | CNTs | 3.0 | 10.0 | 300 | 7.4 | 59.5 | 67.8 |
| Example 19 | CNT-3 | CNTs | 1.5 | 15.0 | 100 | 4.5 | 60.3 | 64.5 |
| Example 20 | CNT-4 | CNTs | 1.2 | 24.0 | 50 | 5.3 | 62.3 | 62.7 |
| Example 21 | CNT-5 | CNTs | 0.7 | 35.0 | 20 | 7.8 | 63.4 | 63.8 |

Based on the foregoing experimental data, the following conclusions can be drawn:
From Example 1 to Example 13 and Comparative Example 1 to Comparative Example 5, it can be seen that when the molar percentage of nickel in the positive electrode active material is high, matching the number of layers of the positive electrode plates with the number of tabs, as well as the thickness of the positive electrode active material layer, and reasonably setting and matching the relationship among the three can effectively reduce the temperature rise of the lithium-ion battery during high-rate discharge. If the ratio of the number of the positive electrode tabs to the number of layers of the positive electrode plates is too small, the temperature rise of the lithium-ion battery during high-rate discharge cannot be effectively suppressed. If the ratio of the number of the positive electrode tabs to the number of layers of the positive electrode plates is too large, the effect of suppressing the temperature rise during high-rate discharge is limited, and it will also affect the capacity retention rate of the lithium-ion battery. Furthermore, if the positive electrode plate is too thin, it will affect the capacity retention rate. If the positive electrode plate is too thick, it will increase the internal resistance of the positive electrode plate, thereby weakening the alleviation in temperature rise brought by matching the number of the positive electrode tabs with the number of layers of the positive electrode plates.

From Example 3 and Example 14 to Example 17, it can be seen that with the thickness of the positive electrode current collector gradually increases, the effect of suppressing the temperature rise of the lithium-ion battery during high-rate discharge first increases and then decreases. Therefore, the thickness of the positive electrode current collector should be maintained within a reasonable range.

From Example 3 and Example 18 to Example 21, it can be seen that a high length-to-diameter ratio of carbon nanotubes is beneficial for reducing the temperature rise. This is because carbon nanotubes with a high length-to-diameter ratio facilitate the formation of a conductive network by the carbon nanotubes between particles, enhancing the conductivity of the positive electrode plate. Dᵥ90 of carbon nanotubes is in a suitable range, which is beneficial to the dispersion of carbon nanotubes. If Dᵥ90 is too large, it can easily lead to a high degree of self-aggregation of carbon nanotubes. If Dᵥ90 is too small, it can easily cause aggregation of carbon nanotubes with the binder and other components, which is unfavorable for the construction of a conductive network. Therefore, adding carbon nanotubes to the positive electrode active material layer and restricting the morphology of carbon nanotubes according to the above conditions is beneficial for reducing the internal resistance of the positive electrode plate, further reducing the internal resistance of the entire electrochemical apparatus. Under the same current, the electrochemical apparatus generates less heat, thus further reducing the temperature rise of the electrochemical apparatus during high-rate discharge.

The foregoing descriptions are merely some embodiments of this application, but are not intended to limit the patent scope of this application. Any equivalent structural or process transformation made based on the content of the specification and accompanying drawings of this application and any direct or indirect use of this application in other related technical fields shall all fall within the patent protection scope of this application in the same way.

## Claims

1. An electrochemical apparatus, comprising an electrode assembly, a positive electrode tab, and a negative electrode tab, wherein the electrode assembly comprises a positive electrode plate, a separator, and a negative electrode plate, the separator is disposed between the positive electrode plate and the negative electrode plate, the positive electrode plate comprises a positive electrode current collector and a positive electrode active material layer, the positive electrode active material layer is disposed on a surface of the positive electrode current collector, the positive electrode active material layer comprises a positive electrode active material, the positive electrode tab is connected to the positive electrode current collector, and the negative electrode tab is connected to the negative electrode plate, wherein
the number a of the positive electrode tabs and the number b of layers of the positive electrode plates satisfy: 0.25≤a/b≤1.25;
a molar percentage X of nickel **in** the positive electrode active material satisfies: X≥60%; and
a thickness h1 of the positive electrode active material layer satisfies: 10µm≤h1≤30µm.

2. The electrochemical apparatus according to claim 1, wherein
the number a of the positive electrode tabs and the number b of layers of the positive electrode plates satisfy: 0.5≤a/b≤1.

3. The electrochemical apparatus according to claim 2, wherein
the molar percentage X of nickel **in** the positive electrode active material satisfies: 80%≤X≤95%.

4. The electrochemical apparatus according to claim 3, wherein
the number a of the positive electrode tabs satisfies: 5≤a≤40; and
the number b of layers of the positive electrode plates satisfies: 20≤b≤40.

5. The electrochemical apparatus according to claim **4,** wherein
a thickness h2 of the positive electrode current collector satisfies: 7µm≤h2≤15µm.

6. The electrochemical apparatus according to claim 4, wherein
the positive electrode active material layer comprises carbon nanotubes, and the carbon nanotubes satisfy at least one of the following conditions:
(1) a length of the carbon nanotubes ranges from 0.1µm to 6µm;
(2) a diameter of the carbon nanotubes ranges from 10nm to 20nm; and
(3) Dᵥ90 of the carbon nanotubes ranges from 3µm to 10µm.

7. The electrochemical apparatus according to claim 1, wherein
Dᵥ90 of the positive electrode active material ranges from 12µm to 30µm.

8. The electrochemical apparatus according to claim 5, wherein
the positive electrode plate further comprises a functional layer, the functional layer is disposed on a same surface of the positive electrode current collector as the positive electrode active material layer, the functional layer is disposed on a side on the surface of the positive electrode current collector near the positive electrode tab, and a thickness of the functional layer ranges from 10µm to 25µm.

9. The electrochemical apparatus according to claim 8, wherein the functional layer comprises inorganic particles and a binder.

10. An electronic device, comprising the electrochemical apparatus according to claims 1 to 9.
